# EUROPÄISCHE PATENTSCHRIFT

(11) **EP 3 391 268 B1**
(45) Veröffentlichungstag und Bekanntmachung des Hinweises auf die Patenterteilung: **25.08.2021**
(21) Anmeldenummer: 16810276.2
(22) Anmeldetag: 01.12.2016
(51) Int. Cl.: G06F 21/35, H04W 12/06, H04W 12/50, H04W 4/80

(54) **VERFAHREN UND EIN SYSTEM ZUR GESCHÜTZTEN KOMMUNIKATION ZWISCHEN EINER MIT EINEM SMARTPHONE GEKOPPELTEN MOBILEN EINHEIT UND EINEM SERVER**
METHOD AND SYSTEM FOR PROTECTED COMMUNICATION BETWEEN A MOBILE UNIT COUPLED TO A SMARTPHONE AND A SERVER
PROCÉDÉ ET SYSTÈME PERMETTANT UNE COMMUNICATION PROTÉGÉE ENTRE UNE UNITÉ MOBILE COUPLÉE À UN TÉLÉPHONE INTELLIGENT ET UN SERVEUR

(30) Priorität: 17.12.2015 DE 102015225792
(43) Veröffentlichungstag der Anmeldung: 24.10.2018
(73) Patentinhaber: Volkswagen Aktiengesellschaft, 38440 Wolfsburg (DE)
(72) Erfinder: GERLACH, Matthias, 14469 Potsdam (DE); ANTEBOTH, Michael, 38106 Braunschweig (DE)
(86) Internationale Anmeldenummer: PCT/EP2016/079437
(87) Internationale Veröffentlichungsnummer: WO 2017/102355

(56) Entgegenhaltungen:
- WO-A1-2015/126095
- WO-A2-2014/143916
- US-A1- 2015 147 065

## Beschreibung

Die Erfindung betrifft ein Verfahren und ein System zur geschützten Kommunikation zwischen einer mit einem Smartphone gekoppelten mobilen Einheit und einem Server sowie ein Computerprogrammprodukt.

Zunehmend zeigt sich die Situation, dass ein Mobilgerät wie ein Smartphone als Basis oder Anknüpfungspunkt für weitere mobile Geräte wie zum Beispiel eine Smartwatch agiert. Zwar werden Bedienkonzepte und Sicherheitsfunktionen auch von dem Smartphone auf die Smartwatch übertragen. Jedoch stellt sich die Frage, ob hinsichtlich der Unterschiede bei den Interfaces und in der Rechenleistung, alle Anforderungen an die Sicherheit und die Bedienerfreundlichkeit auf der Smartwatch gewährleistet werden können.

US 2009/0271621 A1 offenbart ein Verfahren mit erleichterter Login-Funktion für Smartphones, bei dem zunächst Anmeldedaten und eine PIN an einen Server übertragen werden und dieser die Anmeldedaten prüft. Bei erfolgreicher Prüfung werden verschlüsselte Daten umfassend die Anmeldedaten und die PIN an das Smartphone gesendet, das daraufhin bei erneutem Login nur die PIN und die verschlüsselten Daten sendet.

US 2014/168071 A1 offenbart ein Verfahren zur Umleitung persönlicher Daten von einem Computer zu einem anderem Gerät in der Nähe eines Benutzers, wobei die Anwesenheit des Benutzers durch eine Anwesenheitserkennung auf Basis biometrischer Merkmale festgestellt wird.

US 2014/181954 A1 offenbart ein Verfahren zum Übertragen einer digitalen Identität von einem Server zu einem mobilen Gerät wie einem Smartphone und/oder einer Smartwatch. Beispielsweise versieht das Smartphone die Smartwatch mit der vollständigen digitalen Identität, so dass die Smartwatch wie das Smartphone funktionieren kann.

US 2015/147065 A1 betrifft ein Verfahren zum Erkennen eines Entfernens einer tragbaren Authentisierungsvorrichtung. Wird erkannt, dass die tragbare Authentisierungsvorrichtung zwischenzeitlich von einem Körper eines Nutzers entfernt wurde, muss der Nutzer die tragbare Authentisierungsvorrichtung durch Eingabe eines PINs zunächst freischalten, bevor die tragbare Authentisierungsvorrichtung wieder zur automatischen Authentisierung des Nutzers verwendet werden kann.

WO 2014/143916 A2 betrifft eine drahtlose Vorrichtung, die Identifizierungsinformationen speichern kann, um diese bei einer Kauftransaktionen an ein Verkaufsterminal zur Bezahlung auszugeben.

Der Erfindung liegt nun die Aufgabe zugrunde, die Kommunikation zwischen einer mit einem Smartphone gekoppelten mobilen Einheit und einem Server sicher zu gestalten und zu vereinfachen.

Diese Aufgabe wird gelöst durch ein Verfahren gemäß Anspruch 1, ein System gemäß Anspruch 8 beziehungsweise ein Computerprogrammprodukt gemäß Anspruch 12.

Das erfindungsgemäße Verfahren zur geschützten Kommunikation zwischen einer mit einem Smartphone gekoppelten mobilen Einheit und einem Server, wobei über das Smartphone mittels Anmeldedaten ein Zugriff auf einen Dienst des Servers möglich ist, mit den Schritten:
- Erstmaliges Eingeben einer Geheimzahl unter Zuordnung zu den Anmeldedaten;
- Definieren eines Geheimnisses der mobilen Einheit;
- Speichern der Anmeldedaten, der Geheimzahl und des Geheimnisses in einem sicheren Speicher in dem Smartphone;
- Eingeben der Geheimzahl an der mobilen Einheit;
- Übertragen der Geheimzahl und des Geheimnisses von der mobilen Einheit an den sicheren Speicher;
- Auslesen zumindest eines Teils der Anmeldedaten aus dem sicheren Speicher, wenn die übertragene Geheimzahl und das übertragene Geheimnis mit der gespeicherten Geheimzahl und dem gespeicherten Geheimnis übereinstimmen; und
- Übertragen zumindest des Teils der Anmeldedaten von dem Smartphone an den Server.

Das erfindungsgemäße Verfahren hat den Vorteil, dass eine einfache Bedienung bei maximaler Sicherheit erlaubt wird durch eine vereinfachte Eingabe einer Geheimzahl wie einer PIN an der mobilen Einheit anstelle eines Passwortes. Überall, wo eine mobile Einheit, wie zum Beispiel eine Smartwatch, zur Nutzung eines sicheren Accounts genutzt wird, bei dem ein Passwort eingegeben werden muss, kann das hier vorgestellte Verfahren in Verbindung mit einem Smartphone oder einem ähnlichen Mobilgerät die Benutzung vereinfachen. Die Sicherheit bleibt vollständig gewahrt, da die Speicherung der Anmeldedaten, der Geheimzahl und des Geheimnisses ausschließlich in einem sicheren Speicher in dem Smartphone erfolgt. Es erfolgt keine Speicherung dieser Daten in dem Programm, zum Beispiel einer App, auf dem Smartphone oder auf der mobilen Einheit. Das Geheimnis dient dazu, die mobile Einheit, eindeutig zu identifizieren, so dass in Verbindung mit der Geheimzahl eine sichere Anmeldung an dem Smartphone beziehungsweise dessen sicheren Speicher erfolgen kann. Der sichere Speicher kann zum Beispiel ein passwortgeschützter Keystore, das heißt Schlüsselspeicher sein. Das sichere System insgesamt aber zumindest der die jeweilige Geheimzahl betreffende Eintrag ist durch diese Geheimzahl gesichert.

Es kann vorgesehen sein, dass der sichere Speicher in dem Smartphone getrennt ist von einem Daten- und/oder Programmspeicherort. Dies erhöht die Sicherheit, da ein sicherer Speicher höhere Sicherheitsmaßnahmen erlaubt und bietet als ein Programm oder Software wie eine App.

Es kann weiter vorgesehen sein, dass die Anmeldedaten einen Nutzernamen und ein Passwort umfassen, wobei der Teil der Anmeldedaten das Passwort ist. Diese Art von Anmeldedaten sind weit verbreitet, so dass eine weitgehende Kompatibilität zu bestehenden Systemen gegeben ist. Es kann vorgesehen sein, dass von den Anmeldedaten nur das Passwort in dem Speicher gespeichert ist. Üblicherweise ist der Nutzername bekannt, so dass durch diese Maßnahme Speicherplatz in dem sicheren Speicher eingespart werden kann. Der Nutzername kann dann in einem anderen Speicher oder in dem Programm abgelegt sein.

Die mobile Einheit kann eine Smartwatch oder ein Wearable Computer sein. Derartige Einheiten, wie zum Beispiel auch eine Datenbrille oder Daten-Kontaktlinse, nehmen an Bedeutung zu und erlauben vielfach vereinfachte Nutzereingaben. Jedoch sind die Benutzerschnittstellen derartiger mobiler Einheiten meistens für die Eingabe von Passwörtern schlecht geeignet, so dass sich die hier vorgeschlagene Lösung, ein Passwort durch eine einfachere Geheimzahl wie eine etwa vierstellige PIN zu ersetzen gut anbietet.

Es kann vorgesehen sein, dass die Geheimzahl erstmalig an dem Smartphone eingegeben wird. Bei der erstmaligen Eingabe kann es komfortabler und auch sicherer sein, die Geheimzahl direkt in dem Smartphone einzugeben, wo sie gespeichert wird. Alternativ ist eine Eingabe und anschließende Übertragung durch die mobile Einheit möglich.

Das Geheimnis kann eine Netzwerkkennung umfassen. Da die mobile Einheit für eine Kommunikation mindestens eine Schnittstelle zu einem Netzwerk umfasst, kann die eindeutige Kennung wie eine Bluetooth ID oder eine MAC-Adresse (Media-Access-Control-Adresse) verwendet werden. Diese Netzwerkkennung ist bereits vorhanden und ist die Hardware-Adresse jedes einzelnen Netzwerkadapters, um diesen eindeutig in einem Netzwerk zu identifizieren. So kann mit geringem Aufwand eine eindeutige Identifizierung der mobilen Einheit erzielt werden.

Es kann vorgesehen sein, dass nach dem Übertragen zumindest des Teils der Anmeldedaten ein Dienst zwischen dem Server und der mobilen Einheit gestartet wird. Die beschriebenen Verfahrensschritte können über die Kommunikation zum Zugriff oder zur Vorbereitung eines Dienstes hinausgehen und den Start und auch Betrieb eines Dienstes wie zum Beispiel eines Online-Dienstes umfassen. Derartige Dienste sind zum Beispiel bei Fahrzeugen, wie Tür Öffnen, Fahrzeug parken etc., oder bei Haushaltgeräten oder Smart-Home Installationen wie zum Beispiel Waschmaschinen oder Kühlschränken bereits vorhanden.

Das erfindungsgemäße System zur geschützten Kommunikation zwischen einer mit einem Smartphone gekoppelten mobilen Einheit und einem Server, wobei über das Smartphone mittels einer Nutzerkennung ein Zugriff auf einen Dienst des Servers möglich ist, dadurch gekennzeichnet, dass die mobile Einheit ein Geheimnis umfasst, dass das Smartphone und/oder die mobile Einheit eingerichtet ist zur erstmaligen Eingabe einer Geheimzahl unter Zuordnung zu der Nutzerkennung, dass das Smartphone einen sicheren Speicher eingerichtet zur Speicherung der Nutzerkennung, der Geheimzahl und des Geheimnisses aufweist, dass die mobile Einheit eingerichtet ist zur Übertragung der erneut an der mobilen Einheit eingegebenen Geheimzahl und des Geheimnisses von der mobilen Einheit an den sicheren Speicher, dass das Smartphone eingerichtet ist zur Auslesung zumindest eines Teils der Nutzerkennung aus dem sicheren Speicher, wenn die übertragene Geheimzahl und das übertragene Geheimnis mit der gespeicherten Geheimzahl und dem gespeicherten Geheimnis übereinstimmen und zur Übertragung zumindest des Teils der Nutzerkennung von dem Smartphone an den Server. Es gelten die gleichen Vorteile und Modifikationen wie zuvor beschrieben.

Die mobile Einheit kann eine Smartwatch oder ein Wearable Computer sein. Derartige Einheiten, wie zum Beispiel auch eine Datenbrille oder Daten-Kontaktlinse, nehmen an Bedeutung zu und erlauben vielfach vereinfachte Nutzereingaben. Jedoch sind die Benutzerschnittstellen derartiger mobiler Einheiten meistens für die Eingabe von Passwörtern schlecht geeignet, so dass sich die hier vorgeschlagene Lösung, ein Passwort durch eine einfachere Geheimzahl wie eine etwa vierstellige PIN zu ersetzen gut anbietet.

Es kann vorgesehen sein, dass die mobile Einheit und das Smartphone über ein Funknetzwerk kommunizieren. Eine derartige Verbindung ist weit verfügbar und verfügt über ausreichende Sicherheitsstandards, so dass eine sehr gute Kompatibilität vorhanden ist.

Die Verbindung zwischen der mobilen Einheit und dem Smartphone und/oder zwischen dem Smartphone und dem Server kann durch kryptografische Verfahren, wie durch den Einsatz symmetrischer oder asymmetrischer Schlüssel, geschützt sein. So kann die Sicherheit weiter erhöht werden.

Das erfindungsgemäße Computer-Programmprodukt umfasst Programmcode zur Durchführung des zuvor beschriebenen Verfahrens, wenn das Programmprodukt auf einer Vorrichtung oder einem System zur geschützten Kommunikation ausgeführt wird. Es gelten die gleichen Vorteile und Modifikationen wie zuvor beschrieben.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Systems zur geschützten Kommunikation zwischen einer mit einem Smartphone gekoppelten mobilen Einheit und einem Server; und
- Figur 2: eine schematische Darstellung eines Verfahrens zur geschützten Kommunikation zwischen einer mit einem Smartphone gekoppelten mobilen Einheit und einem Server.

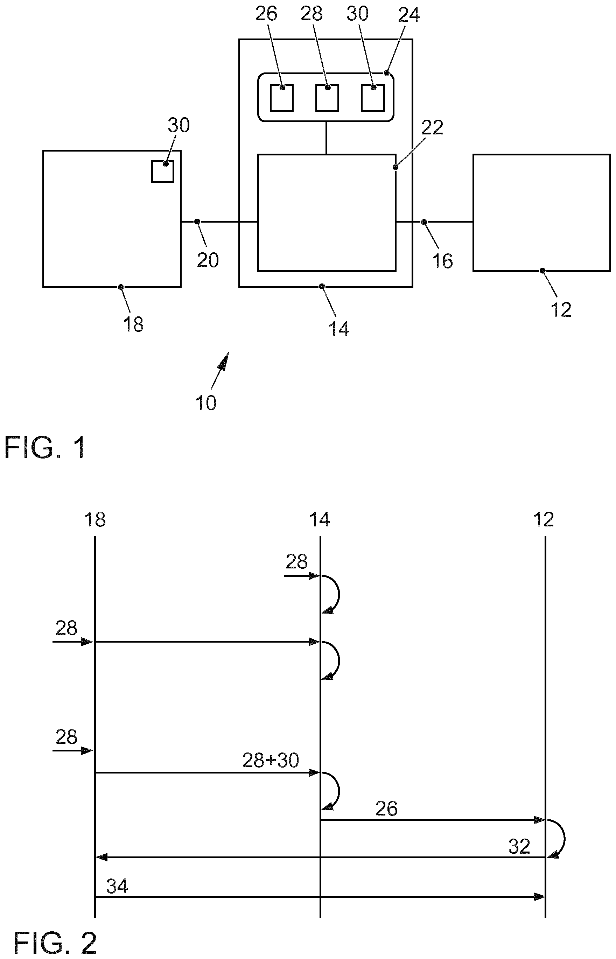

Figur 1 zeigt eine schematische Darstellung eines Systems 10 zur geschützten Kommunikation mit einem Server 12 und einem Smartphone 14. Der Server 12 oder auch ein Backend bieten Online Dienste an, beispielsweise für Fahrzeuge, Haushaltsgeräte oder ähnliches. Das Smartphone 12 kann auch ein tragbarer Computer wie ein Tablet oder ähnliches sein. Über eine Kommunikationsverbindung 16 kommunizieren der Server 12 und das Smartphone 14 miteinander. Die Kommunikationsverbindung 16 kann über ein Funknetz wie ein Mobilfunknetz aufgebaut sein beziehungsweise werden. Die Kommunikationsverbindung 16 kann mit einem kryptographischen Verfahren geschützt sein.

Mit dem Smartphone 14 und über das Smartphone 14 auch mit dem Server 12 ist eine mobile Einheit, hier eine Smartwatch 18, gekoppelt. Die mobile Einheit kann auch ein Wearable Computer oder ein Wearable Device, das heißt ein tragbares Gerät, wie zum Beispiel eine smarte Brille oder eine in einem Kleidungstück angeordnete Recheneinheit sein.

Über eine Kommunikationsverbindung 20 kommunizieren die Smartwatch 18 und das Smartphone 14 miteinander. Die Kommunikationsverbindung 20 ist typischerweise ein Kurzstreckenfunk, wie zum Beispiel Bluetooth, Nahfeldkommunikation oder ähnliches. Die Übertragungsreichweite liegt hier im Bereich von Zentimetern bis wenigen Metern. Die Kommunikationsverbindung 20 kann mit einem kryptographischen Verfahren geschützt sein.

Um den von dem Server 12 angebotenen Dienst nutzen zu können, befindet sich auf dem Smartphone 14 ein Programm 22. Das Programm 22 kann zum Beispiel eine App sein, die von dem Server 12 oder einer anderen Quelle heruntergeladen und auf dem Smartphone 14 installiert wurde. Die Software oder das Programm 22 kann eine eigenständige Einheit sein oder aus mehreren Elementen, die auch in Hardware ausgeführt sein können, bestehen.

Weiterhin enthält das Smartphone 14 einen sicheren Speicher 24, der zum Beispiel mit einem Passwort oder Schlüssel gesichert ist und in dem sich Anmeldedaten 26 für eine Anmeldung oder einen Zugriff auf einen Dienst des Servers 12 befinden. Die Anmeldedaten 26 umfassen einen Benutzernamen und ein dazugehöriges Passwort.

Weiter ist in dem sicheren Speicher 24 eine Geheimzahl 28 gespeichert. Die Geheimzahl 28 wie eine PIN (Persönliche Identifikationsnummer) zum Beispiel mit vier Ziffern wurde unter Zuordnung zu den Anmeldedaten 26 in dem Smartphone 14 oder der Smartwatch 18 eingegeben. Die Geheimzahl 28 dient zur vereinfachten Eingabe einer Zugangskennung an der Smartwatch 18, welche oftmals ein rudimentäres Nutzerinterface aufweisen. Wie später im Zusammenhang mit Figur 2 beschrieben wird, ersetzt die Eingabe der Geheimzahl 28 die Eingabe eines meist komplexeren Passworts der Anmeldedaten 26.

Weiter ist in dem sicheren Speicher 24 ein Geheimnis 30 gespeichert. Das Geheimnis 30 ist eine eindeutige Kennzeichnung der Smartwatch 18. Dies kann zum Beispiel eine Netzwerkkennung wie eine Bluetooth ID oder eine MAC (Media Access Control) sein oder auch eine Pseudozufallszahl sein.

Anhand von Figur 2 wird nun das Verfahren zur geschützten Kommunikation zwischen der mit dem Smartphone 14 gekoppelten Smartwatch 18 und dem Server 12 beschrieben.

Zunächst wird gewissermaßen als Vorbereitung die Geheimzahl 28 unter Zuordnung zu den Anmeldedaten 26 in dem Smartphone 14 eingegeben und zusammen mit den Anmeldedaten 26 und dem Geheimnis 30 in dem sicheren Speicher 24 gespeichert. Die Geheimzahl 28 kann in dem Smartphone 14 eingegeben werden oder in der Smartwatch 18 und dann an das Smartphone 14 zur oben beschriebenen Speicherung übertragen werden.

Wenn nun ein Benutzer mit seiner Smartwatch 18 einen Service oder Dienst des Servers 12, wie zum Beispiel das Öffnen seines Fahrzeugs, nutzen möchte, gibt er zunächst die Geheimzahl 28 an der Smartwatch 18 ein. Die Geheimzahl 28 wird dann zusammen mit dem Geheimnis 30 an die Smartwatch 14 übertragen.

In der Smartwatch 14 wird mit der Geheimzahl 28 und dem Geheimnis 30 auf den sicheren Speicher 24 zugegriffen. Bei erfolgreicher Prüfung der Daten, das heißt der Zugangsberechtigung auf den sicheren Speicher 26 anhand der Geheimzahl 28 und des Geheimnisses 30, werden die Anmeldedaten 26 für den Benutzer des Smartphones 14 und damit auch der Smartwatch 18 aus dem sicheren Speicher ausgelesen und an den Server 12 übertragen.

Auf dem Server 12 werden die Anmeldedaten 26, das heißt Benutzername und Passwort, überprüft und bei positiver Prüfung wird der angeforderte Dienst 32 mit einer Nachricht oder Datenübertragung von dem Server 12 zu der Smartwatch 18 gestartet. Falls bei diesem Dienst 32 vorgesehen, sendet die Smartwatch 18 Nachrichten oder Daten 34 zurück an den Server. Die Kommunikation zwischen dem Server 12 und der Smartwatch 18 kann über das Smartphone 14 laufen. Zum Beispiel können der Server 12 und das Smartphone 14 über ein Mobilfunkprotokoll kommunizieren und das Smartphone 14 kann dann mit der Smartwatch 18 über eine Bluetooth Low Energy Verbindung kommunizieren. Alternativ kann die Kommunikation zwischen dem Server 12 und der Smartwatch 18 direkt, das heißt ohne Einbindung des Smartphones 14 in die Ausführung des Dienstes 32, erfolgen. In diesem Fall kann es nötig sein, dass das Smartphone 14 Adressinformationen der Smartwatch 18 an den Server 12 überträgt.

Somit kann durch einfache Eingabe einer Geheimzahl 28, wie einer PIN, an der Smartwatch 18 eine Authentifizierung an dem Server 12 erfolgen. Zudem ist das Verfahren sehr sicher, da die Geheimzahl 28 nur auf dem Smartphone 14 verbleibt, wenn es dort eingegeben wurde. Alle wichtigen Daten wie die Anmeldedaten 26, die Geheimzahl 28 und das Geheimnis 30 werden nur in dem sicheren Speicher 24 des Smartphones 14 und nicht auf der Smartwatch 18 oder in dem Programm 22 gespeichert.

### Bezugszeichenliste

- 10: System
- 12: Server
- 14: Smartphone
- 16: Kommunikationsverbindung
- 18: Smartwatch
- 20: Kommunikationsverbindung
- 22: Programm
- 24: sicherer Speicher
- 26: Anmeldedaten
- 28: Geheimzahl
- 30: Geheimnis
- 32: Dienst
- 34: Daten

## Patentansprüche

1. Verfahren zur geschützten Kommunikation zwischen einer mit einem Smartphone (14) gekoppelten mobilen Einheit (18) und einem Server (12), wobei über das Smartphone (14) mittels Anmeldedaten ein Zugriff auf einen Dienst (32) des Servers (12) möglich ist, mit den Schritten:
- Erstmaliges Eingeben einer Geheimzahl (28) unter Zuordnung zu den Anmeldedaten (26) an dem Smartphone (14) und/oder an der gekoppelten mobilen Einheit (18);
- Definieren eines Geheimnisses (30) der mobilen Einheit (18), wobei das Geheimnis (30) dazu dient die mobile Einheit (18) eindeutig zu identifizieren;
- Speichern der Anmeldedaten (26), der erstmalig eingegebenen Geheimzahl (28) und des definierten Geheimnisses (30) in einem sicheren Speicher (24) in dem Smartphone (14);
- Erneutes Eingeben der Geheimzahl (28) an der mobilen Einheit (18);
- Übertragen der erneut eingegebenen Geheimzahl (28) und des definierten Geheimnisses (30) von der mobilen Einheit (18) an den sicheren Speicher (24) in dem Smartphone (14);
- Auslesen zumindest eines Teils der Anmeldedaten (26) aus dem sicheren Speicher (24) des Smartphones (14), wenn die zuvor übertragene Geheimzahl (28) und das zuvor übertragene definierte Geheimnis (30) mit der im sicheren Speicher (24) des Smartphones (14) gespeicherten Geheimzahl (28) und dem gespeicherten definierten Geheimnis (30) übereinstimmen; und
- Übertragen zumindest des zuvor ausgelesenen Teils der Anmeldedaten (26) von dem Smartphone (14) an den Server (12) für den Zugriff auf den Dienst.

2. Verfahren nach Anspruch 1, **dadurch gekennzeichnet, dass** der sichere Speicher (24) in dem Smartphone (14) getrennt ist von einem Daten- und/oder Programmspeicherort.

3. Verfahren nach einem der vorhergehenden Ansprüche, **dadurch gekennzeichnet, dass** die Anmeldedaten (26) einen Nutzernamen und ein Passwort umfassen, wobei der Teil der Anmeldedaten (26) das Passwort ist.

4. Verfahren nach einem der vorhergehenden Ansprüche, **dadurch gekennzeichnet, dass** die mobile Einheit (18) eine Smartwatch oder ein Wearable Computer ist.

5. Verfahren nach einem der vorhergehenden Ansprüche, **dadurch gekennzeichnet, dass** die Geheimzahl (28) erstmalig an dem Smartphone (14) eingegeben wird.

6. Verfahren nach einem der vorhergehenden Ansprüche, **dadurch gekennzeichnet, dass** das Geheimnis (30) eine Netzwerkkennung umfasst.

7. Verfahren nach einem der vorhergehenden Ansprüche, **dadurch gekennzeichnet, dass** nach dem Übertragen zumindest des Teils der Anmeldedaten (26) ein Dienst zwischen dem Server (12) und der mobilen Einheit (18) gestartet wird.

8. System zur geschützten Kommunikation zwischen einer mit einem Smartphone (14) gekoppelten mobilen Einheit (18) und einem Server (12), wobei über das Smartphone (14) mittels einer Nutzerkennung ein Zugriff auf einen Dienst (32) des Servers (12) möglich ist, wobei die mobile Einheit (18) ein Geheimnis (30) umfasst, wobei das Geheimnis (30) dazu dient die mobile Einheit (18) eindeutig zu identifizieren, wobei das Smartphone (14) und/oder die mobile Einheit (18) eingerichtet ist zur erstmaligen Eingabe einer Geheimzahl (28) unter Zuordnung zu der Nutzerkennung, wobei das Smartphone (14) einen sicheren Speicher (24) eingerichtet zur Speicherung der Nutzerkennung, der erstmalig eingegebenen Geheimzahl (28) und des Geheimnisses (30) aufweist, wobei die mobile Einheit (18) eingerichtet ist zur Übertragung der erneut an der mobilen Einheit (18) eingegebenen Geheimzahl (28) und des Geheimnisses (30) von der mobilen Einheit (18) an den sicheren Speicher (24) des Smartphones (14), wobei das Smartphone (14) eingerichtet ist zur Auslesung zumindest eines Teils der Nutzerkennung aus dem sicheren Speicher (24) des Smartphones (14), wenn die übertragene Geheimzahl (28) und das übertragene Geheimnis (30) mit der im sicheren Speicher (24) des Smartphones (14) gespeicherten Geheimzahl (28) und dem im sicheren Speicher (24) des Smartphones (14) gespeicherten Geheimnis (30) übereinstimmen und zur Übertragung zumindest des zuvor ausgelesenen Teils der Nutzerkennung von dem Smartphone (14) an den Server (12) für den Zugriff auf den Dienst.

9. System nach Anspruch 8, **dadurch gekennzeichnet, dass** die mobile Einheit (18) eine Smartwatch oder ein Wearable Computer ist.

10. System nach Anspruch 8 oder 9, **dadurch gekennzeichnet, dass** die mobile Einheit (18) und das Smartphone (14) über ein Funknetzwerk kommunizieren.

11. System nach einem der Ansprüche 8 bis 10, **dadurch gekennzeichnet, dass** die Verbindung zwischen der mobilen Einheit (18) und dem Smartphone (14) und/oder zwischen dem Smartphone (14) und dem Server (12) durch kryptografische Verfahren geschützt ist.

12. Computer-Programmprodukt mit Programmcode zur Durchführung des Verfahrens nach einem der Ansprüche 1 bis 7, wenn das Programmprodukt auf einem System (10) zur geschützten Kommunikation ausgeführt wird.

## Claims

1. Method for protected communication between a mobile unit (18) coupled to a smartphone (14) and a server (12), wherein it is possible to access a service (32) of the server (12) via the smartphone (14) by means of registration data, comprising the steps:
- first-time entry of a secret number (28) in association with the registration data (26) on the smartphone (14) and/or on the coupled mobile unit (18) ;
- definition of a secret (30) of the mobile unit (18), wherein the secret (30) serves to uniquely identify the mobile unit (18);
- storage of the registration data (26), of the secret number (28) entered the first time and of the defined secret (30) in a secure memory (24) in the smartphone (14);
- re-entry of the secret number (28) on the mobile unit (18);
- transmission of the re-entered secret number (28) and of the defined secret (30) from the mobile unit (18) to the secure memory (24) in the smartphone (14) ;
- reading of at least part of the registration data (26) from the secure memory (24) of the smartphone (14) if the previously transmitted secret number (28) and the previously transmitted defined secret (30) match the secret number (28) stored in the secure memory (24) of the smartphone (14) and the stored defined secret (30); and
- transmission of at least the previously read part of the registration data (26) from the smartphone (14) to the server (12) in order to access the service.

2. Method according to Claim 1, **characterized in that** the secure memory (24) in the smartphone (14) is separated from a data and/or program storage location.

3. Method according to either of the preceding claims, **characterized in that** the registration data (26) comprise a username and a password, wherein the part of the registration data (26) is the password.

4. Method according to one of the preceding claims, **characterized in that** the mobile unit (18) is a smartwatch or a wearable computer.

5. Method according to one of the preceding claims, **characterized in that** the secret number (28) is entered for the first time on the smartphone (14).

6. Method according to one of the preceding claims, **characterized in that** the secret (30) comprises a network identifier.

7. Method according to one of the preceding claims, **characterized in that**, following the transmission of at least part of the registration data (26), a service between the server (12) and the mobile unit (18) is started.

8. System for protected communication between a mobile unit (18) coupled to a smartphone (14) and a server (12), wherein it is possible to access a service (32) of the server (12) via the smartphone (14) by means of a user identifier, wherein the mobile unit (18) comprises a secret (30), wherein the secret (30) serves to uniquely identify the mobile unit (18), wherein the smartphone (14) and/or the mobile unit (18) is designed for the first-time entry of a secret number (28) in association with the user identifier, wherein the smartphone (14) has a secure memory (24) designed to store the user identifier, the secret number (28) entered the first time and the secret (30), wherein the mobile unit (18) is designed to transmit the secret number (28) re-entered on the mobile unit (18) and the secret (30) from the mobile unit (18) to the secure memory (24) of the smartphone (14), wherein the smartphone (14) is designed to read at least part of the user identifier from the secure memory (24) of the smartphone (14) if the transmitted secret number (28) and the transmitted secret (30) match the secret number (28) stored in the secure memory (24) of the smartphone (14) and the secret (30) stored in the secure memory (24) of the smartphone (14) and to transmit at least the previously read part of the user identifier from the smartphone (14) to the server (12) in order to access the service.

9. System according to Claim 8, **characterized in that** the mobile unit (18) is a smartwatch or a wearable computer.

10. System according to Claim 8 or 9, **characterized in that** the mobile unit (18) and the smartphone (14) communicate via a radio network.

11. System according to one of Claims 8 to 10, **characterized in that** the connection between the mobile unit (18) and the smartphone (14) and/or between the smartphone (14) and the server (12) is protected by cryptographic methods.

12. Computer program product comprising program code for carrying out the method according to one of Claims 1 to 7 when the program product is executed on a system (10) for protected communication.

## Revendications

1. Procédé de communication sécurisée entre une unité mobile (18) couplée à un Smartphone (14) et un serveur (12), un accès à un service (32) du serveur (12) étant possible par le biais du Smartphone (14) au moyen de données de connexion, comprenant les étapes suivantes:
- saisie pour la première fois d'un code confidentiel (28) en l'associant aux données de connexion (26) sur le Smartphone (14) et/ou sur l'unité mobile (18) couplée;
- définition d'un secret (30) de l'unité mobile (18), le secret (30) servant à identifier univoquement l'unité mobile (18);
- mémorisation des données de connexion (26), du code confidentiel (28) saisi pour la première fois et du secret (30) défini dans une mémoire (24) sécurisée dans le Smartphone (14);
- nouvelle saisie du code confidentiel (28) sur l'unité mobile (18);
- transmission du code confidentiel (28) nouvellement saisi et du secret (30) défini de l'unité mobile (18) à la mémoire (24) sécurisée dans le Smartphone (14);
- lecture d'au moins une partie des données de connexion (26) depuis la mémoire (24) sécurisée du Smartphone (14) lorsque le code confidentiel (28) transmis précédemment et le secret (30) défini transmis précédemment coïncident avec le code confidentiel (28) mémorisé dans la mémoire (24) sécurisée du Smartphone (14) et le secret (30) défini mémorisé; et
- transmission d'au moins la partie des données de connexion (26) lue précédemment du Smartphone (14) au serveur (12) pour l'accès au service.

2. Procédé selon la revendication 1, **caractérisé en ce que** la mémoire (24) sécurisée dans le Smartphone (14) est séparée d'un emplacement de mémorisation de données et/ou de programme.

3. Procédé selon l'une des revendications précédentes, **caractérisé en ce que** les données de connexion (26) comportent un nom d'utilisateur et un mot de passe, la partie des données de connexion (26) étant le mot de passe.

4. Procédé selon l'une des revendications précédentes, **caractérisé en ce que** l'unité mobile (18) est une montre connectée ou un ordinateur à porter sur soi.

5. Procédé selon l'une des revendications précédentes, **caractérisé en ce que** le code confidentiel (28) est saisi pour la première fois sur le Smartphone (14).

6. Procédé selon l'une des revendications précédentes, **caractérisé en ce que** le secret (30) comporte un identificateur de réseau.

7. Procédé selon l'une des revendications précédentes, **caractérisé en ce qu'**après la transmission d'au moins la partie des données de connexion (26), un service est démarré entre le serveur (12) et l'unité mobile (18).

8. Système destiné à la communication sécurisée entre une unité mobile (18) couplée à un Smartphone (14) et un serveur (12), un accès à un service (32) du serveur (12) étant possible par le biais du Smartphone (14) au moyen d'un identificateur d'utilisateur, l'unité mobile (18) comportant un secret (30), le secret (30) servant à identifier univoquement l'unité mobile (18), le Smartphone (14) et/ou l'unité mobile (18) étant conçus pour une saisie pour la première fois d'un code confidentiel (28) en l'associant à l'identificateur d'utilisateur, le Smartphone (14) possédant une mémoire sécurisée (24) conçue pour la mémorisation de l'identificateur d'utilisateur, du code confidentiel (28) saisi pour la première fois et du secret (30), l'unité mobile (18) étant conçue pour la transmission du code confidentiel (28) nouvellement saisi sur l'unité mobile (18) et du secret (30) de l'unité mobile (18) à la mémoire (24) sécurisée du Smartphone (14), le Smartphone (14) étant conçu pour lire au moins une partie de l'identificateur d'utilisateur depuis la mémoire (24) sécurisée du Smartphone (14) lorsque le code confidentiel (28) transmis et le secret (30) transmis coïncident avec le code confidentiel (28) mémorisé dans la mémoire (24) sécurisée du Smartphone (14) et le secret (30) mémorisé dans la mémoire (24) sécurisée du Smartphone (14) et pour transmettre au moins la partie de l'identificateur d'utilisateur lue précédemment du Smartphone (14) au serveur (12) pour l'accès au service.

9. Système selon la revendication 8, **caractérisé en ce que** l'unité mobile (18) est une montre connectée ou un ordinateur à porter sur soi.

10. Système selon la revendication 8 ou 9, **caractérisé en ce que** l'unité mobile (18) et le Smartphone (14) communiquent par le biais d'un réseau radioélectrique.

11. Système selon l'une des revendications 8 à 10, **caractérisé en ce que** la liaison entre l'unité mobile (18) et le Smartphone (14) et/ou entre le Smartphone (14) et le serveur (12) est protégée par un procédé cryptographique.

12. Produit de programme informatique comprenant un code de programme destiné à mettre en œuvre le procédé selon l'une des revendications 1 à 7 lorsque le produit de programme est exécuté sur un système (10) destiné à la communication sécurisée.
